(19) Europäisches Patentamt / European Patent Office / Office européen des brevets

(11) **EP 3 600 877 B1**

(12) **EUROPEAN PATENT SPECIFICATION**

(45) Date of publication and mention
of the grant of the patent:
**18.10.2023 Bulletin 2023/42**

(21) Application number: **18712221.3**

(22) Date of filing: **23.03.2018**

(51) International Patent Classification (IPC):
**B32B 7/02** *(2019.01)*      **B32B 7/12** *(2006.01)*
**B32B 27/08** *(2006.01)*     **B32B 27/18** *(2006.01)*
**B32B 27/20** *(2006.01)*     **B32B 27/30** *(2006.01)*
**B32B 27/32** *(2006.01)*     **B32B 27/34** *(2006.01)*
**B32B 27/36** *(2006.01)*     **B32B 37/00** *(2006.01)*
**B32B 38/00** *(2006.01)*

(52) Cooperative Patent Classification (CPC):
**B32B 7/12; B32B 27/08; B32B 27/18; B32B 27/20;
B32B 27/306; B32B 27/32; B32B 27/34;
B32B 27/36; B32B 37/00; B32B 38/0012;**
B32B 2250/24; B32B 2250/40; B32B 2270/00;
B32B 2307/30; B32B 2307/514;          (Cont.)

(86) International application number:
**PCT/EP2018/057415**

(87) International publication number:
**WO 2018/172510 (27.09.2018 Gazette 2018/39)**

(54) **ORIENTED MULTILAYER BARRIER FILM**

AUSGERICHTETER MEHRSCHICHTIGER BARRIERENFILM

FILM BARRIÈRE MULTICOUCHE ORIENTÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2017 EP 17162790**

(43) Date of publication of application:
**05.02.2020 Bulletin 2020/06**

(73) Proprietor: **Borealis AG
1020 Vienna (AT)**

(72) Inventors:
• **DE WEVER, Willem
3500 Hasselt (BE)**
• **CAVACAS, Paulo
3140-166 Coutada (PT)**

(74) Representative: **Dehns
St. Bride's House
10 Salisbury Square
London EC4Y 8JD (GB)**

(56) References cited:
**EP-A1- 2 106 342      EP-A1- 2 796 289
EP-B1- 2 106 342      WO-A2-02/051630
US-A- 5 759 648**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/516; B32B 2307/54; B32B 2307/558;
B32B 2307/708; B32B 2307/72; B32B 2307/7244;
B32B 2410/00; B32B 2439/70; B32B 2439/80

## Description

The invention described herein relates to oriented multilayer barrier polymer films, especially films having a low oxygen transmission rate. The films of the invention include a barrier layer embedded in a polyethylene layer linked by an adhesive tie layer and are produced using orientation processes. These films possess improved barrier properties in the sense of lower oxygen permeability when compared to conventional barrier layer containing polymer films.

The invention also indicates use of the polymer films, e.g. in the food packaging industry.

## Background Information

Multilayer barrier films are widely used, especially as packaging materials. These films can exhibit advantageous properties resulting from the different properties of the various layers within the film.

Films for packaging foods often need to have a low oxygen transmission rate (OTR) or a low oxygen permeability, and this is achieved using a gas-impermeable barrier layer.

It is a well-known fact, that the production of multilayer barrier films is linked with several challenges:
The barrier layer can have a deterring effect on the mechanical properties of the multilayer film. Ethylene-vinyl alcohol copolymer (EVOH), commonly used as a barrier layer, often has poor melt strength and can weaken the film in view of processability and stretchability.

Furthermore, the barrier behaviour correlates with the amount of (amphiphilic) polar groups in the barrier polymer, whereas processability and stretch-ability correlate with the amount of non-polar groups in the barrier polymer. It is well known to the person skilled in the art, that improving the one property cannot be achieved without giving in on the other properties.

Films for packaging foods also need to have good mechanical properties in the sense of good impact behaviour as well as good mechanical properties both in machine and perpendicular direction.

Machine direction oriented films, which are often also referred to as mono-directionally oriented films (MDO-films), are also well known in industry.

MDO films are known to have both improved stiffness and impact behaviour. However, the monoaxial stretching - due to the distinct orientation of the polymer chains in the direction of the stretching - may deteriorate the mechanical properties in transverse direction, resulting in films with non-isotropic behaviour when comparing machine direction (MD) with transversal direction (TD) properties.

Oriented (=stretched) multilayer barrier films furthermore need a very good layer adhesion to each other, so to withstand the orientation steps without any delamination between the barrier and its adjacent layers.

## Description of the prior art:

EP2106342 discloses multilayer film comprising high density polyethylene (HDPE) layers, an ethylene-vinyl alcohol copolymer (EVOH) layer and a method of making the film are disclosed. The multilayer film is post-oriented uniaxially in the machine direction. Multilayer films made up from HDPE are known for their stiffness, as well as for low impact behaviour and/or anisotropy in the sense of big differences in the Elmendorf tear resistance. The setup of the multilayer film is such that the barrier layer forms 20 % of the total film thickness.

EP2796289 relates to a blown multilayer film comprising a barrier layer (A) comprising a polar barrier polymer; a tie layer (B) comprising an adhesive polymer mixed with a non-polar ethylene polymer; and a non-polar polyethylene layer (C) comprising a non-polar ethylene polymer as used in layer (B); wherein layer (B) is adjacent to layers (A) and (C) and layers (A) to (C) are present in the order ABC in the film.

US5759648 describes a heat shrinkable multilayer film comprising at least five layers. The multilayer film is preferably biaxially oriented and has high seal strength.

WO02/051630 relates to a multilayer film comprising a layer (A) comprising a polyethylene polymer; a tie layer (B) comprising a maleic anhydride grafted polyolefin; a barrier layer (C) comprising an ethylene vinyl alcohol copolymer and layer (D) comprising a polyamide; wherein when layers (C) and (D) are adjacent, they are chemically different but compatible to adhere to each other.

It is a constant desire within the entire film and packaging industry to provide solutions which show improved properties in the sense of improved mechanical and/or barrier properties.

It is an equally constant desire to provide film solutions, which can be manufactured in a more cost efficient way. This is sought by optimizing film structures, film production processes, employing less material and resources or applying alternative conversion methods, always striving to keep performance at a known and accepted good level. It is therefore a constant need to provide materials or processes that allow the production of films requiring less material input to allow the production more cost efficient packaging solutions.

It is a well-known fact, that polymers commonly used for barrier purposes (such as polyamide, polyesters or ethylene-vinyl-alcohol copolymers) are more expensive than polyolefins used in such applications. So it is a constant desire to reduce the thickness of the barrier layers and accordingly reduce costs for the application, while maintaining barrier properties at a sufficiently high level.

The film and packaging industry constantly strives to provide packaging solutions, which are sustainable and are based on safe resources and which are further easy to recycle. Recycling is therefore a topic of big socioeconomic interest and has accordingly a high priority.

So in view of improving recyclability it is necessary to provide monomaterial solutions (also known as "100% PE solutions") which have enhanced stiffness, good impact behaviour, good barrier properties and isotropic mechanical properties. These targeted properties are to be achieved by using materials chosen out of just one chemical group, namely ethylene based polymers.

**Object of the invention**

It was hence an object of the present invention to find a barrier film or films which show better mechanical properties in the sense of better stiffness, good impact behaviour and isotropic behaviour of the mechanical properties. It was further object of the present invention to provide films showing better barrier properties at given layer thickness or give the same barrier performance as known in the prior art at lower layer thicknesses.

It was a further object of the present invention to provide a multilayer film structure that can be easily processed and stretched into an oriented multilayer film while showing good adhesion and processability and still maintaining both barrier and mechanical properties on a high level. As a further object of the invention, the present inventors have sought for a multilayer film structure that can easily be recycled.

So the present inventors have surprisingly identified an oriented multilayer barrier polymer film which shows improved barrier properties and provides better stiffness, good impact behaviour and better isotropic behaviour of the mechanical properties.

Seen from another aspect, the inventors have identified an oriented multilayer barrier polymer film, which shows good barrier properties at a thinner barrier layer, allowing manufacturing the film at lower costs.

Seen from still another view, the inventors have identified an oriented multilayer barrier polymer film which provides tensile modulus of about double the values of a comparable multilayer film produced in blown-film technology having at the same time good isotropy as known from blown films.

This oriented multilayer barrier polymer film of the present invention also shows a good isotropic behaviour in and perpendicular to the machine direction as well as good impact behaviour. Thus the present invention provides thinner films with similar or even improved mechanical and barrier properties compared to prior art films.

Thus viewed from one aspect the invention provides an oriented multilayer barrier polymer film comprising

A) a barrier layer A comprising a polar barrier polymer,
B) a tie layer B comprising an amphiphilic polymer and a non-polar ethylene polymer and
C) a polyethylene layer C comprising a multimodal copolymer of ethylene and at least one comonomer selected from C4-C10 alpha olefins, having a Melt flow rate MFR190/5 of at most 5.0 g/10 min when measured according to ISO1133 and a density of at least 920 to at most 939 kg/m$^3$ when measured according to ISO1183,

wherein layer B is adjacent to layers A and C and layers A, B and C are present in the film as layer structure -ABC- in the order ABC, wherein the oriented multilayer barrier polymer film is mono-axially oriented.

Viewed from another aspect the invention provides articles comprising the oriented multilayer barrier polymer film of the present invention. Such articles can be used for packaging food, medical, pharmaceutical or agricultural products.

In a preferred embodiment, the invention relates to a process for manufacturing oriented multilayer barrier polymer films.

In an alternatively preferred embodiment the invention provides an oriented multilayer barrier film having good (isotrop) mechanical and barrier properties and good recyclability.

The oriented multilayer barrier films of the present invention are, in a further preferred embodiment, used for packaging food, medical or pharmaceutical articles and agricultural products.

In an embodiment, an oriented multilayer barrier polymer film according to the invention may thereby be fully ethylene based. Fully ethylene based in the sense of the invention may thereby mean that every polymeric component of the oriented multilayer barrier polymer film comprises at least ethylene as a (co)monomer. While this may contribute to improve recyclability this also leads to challenges regarding barrier properties, whereby the invention may surprisingly allow maintaining or obtaining good barrier properties.

**Detailed description:**

The present invention discloses an oriented multilayer barrier polymer film comprising

A) a barrier layer A comprising a polar barrier polymer,
B) a tie layer B comprising an amphiphilic polymer and a non-polar ethylene polymer and
C) a polyethylene layer C comprising a multimodal copolymer of ethylene and at least one comonomer selected from C4-C10 alpha olefins, having a Melt flow rate MFR190/5 of at most 5.0 g/10 min when measured according to ISO1133 and a density of at least 920 to at most 939 kg/m$^3$ when measured according to ISO1183,

wherein layer B is adjacent to layers A and C and layers A, B and C are present in the film as layer structure -ABC- in the order ABC, wherein the oriented multilayer barrier polymer film is ono-axially oriented. ADO.
The order ABC is to be understood also as order CBA.

**General statement:**

According to this invention the terms "oriented multilayer barrier polymer film", "oriented multilayer film", and the term "oriented barrier film", are synonyms. In context with non-oriented (primary) films, the terms "multilayer barrier polymer film", "multilayer barrier film" or "multilayer polymer film" are synonyms.
According to this invention a "primary" film is understood to be non-stretched, a "secondary" film is understood to be stretched, i.e. uniaxially oriented.
It is further noted, that values indicated are to be understood as average values of a representative sample.
The present invention is concerned with improving the properties of oriented multilayer films, especially gas-impermeable barrier films for packaging food, medical, pharmaceutical or agricultural products and the like.
The oriented multilayer films of the invention include at least three layers, a barrier layer (A) comprising a polar barrier polymer, a polyethylene layer (C) comprising a multimodal copolymer of ethylene and at least one, or at least two different alpha olefin comonomers, and a tie layer (B) to adhere the barrier layer to the multimodal polyethylene copolymer layer. The tie layer may comprise an amphiphilic polymer and a non-polar ethylene polymer.
The oriented multilayer barrier films of the invention will typically have from 3 to 11, preferably from 3 to 9 layers, more preferably 5 to 8 layers, especially 6 to 8 layers, e.g. 7 layers. The total thickness of the oriented multilayer barrier polymer films will typically be in the region of at most 100 $\mu$m, like at most 80 $\mu$m, preferably in the range of 10 to 100 $\mu$m, like in the range of 15 to 80 $\mu$m, more preferably from 15 to 60 $\mu$m, in particular 20 to 50 $\mu$m, especially in the range of 30 to 40 $\mu$m.
The oriented multilayer barrier films are produced by orienting (stretching) a non-oriented (primary) multilayer barrier film by a certain stretch ratio to achieve the final thickness of the oriented (secondary) multilayer barrier film.
The primary multilayer barrier film can be produced by any conventional film, like a blown film or a cast film. It is preferred, that the primary multilayer barrier film is a blown film.
The thickness of the primary multilayer barrier film will depend on the stretching ratio and the final thickness of the oriented multilayer barrier films. Typically the thickness of the primary multilayer barrier film will in the range of 75.0 - 250 $\mu$m, such as 100 - 200 $\mu$m or 125 - 175 $\mu$m.
The primary multilayer barrier film is is stretched in the machine direction. Stretching may be carried out by any conventional technique using any conventional stretching devices which are well known to those skilled in the art. The film is stretched only in the MD. The effect of stretching in only one direction results in a mono-axially oriented the film.
The primary multilayer barrier film is stretched at least 3 times, preferably 3 to 10 times, its original length in the machine direction. This is stated herein as a stretch ratio of at least 1:3, i.e. "1" represents the original length of the film and "3" denotes that it has been stretched to 3 times that original length. Preferred films of the invention are stretched in a draw ratio of at least 1:4 to 1:8, more preferably between 1:5 and 1:8, e.g. between 1:5 and 1:7. An effect of stretching (or drawing) is that the thickness of the film is similarly reduced. Thus a draw ratio of at least 1:3 preferably also means that the thickness of the film is at least three times less than the original thickness.
Stretching is preferably carried out at a temperature in the range 70-130 °C, e.g. 90 - 110 or about 105 °C.
Films of the invention may be symmetric or asymmetric. A symmetric film is one in which the layers, from the outermost layers inwards, are equal on each side of the film. For example, a symmetric film of the invention which includes five layers may comprise these disposed in the order multimodal polyethylene co-polymer layer/tie layer/barrier layer/tie layer/multimodal polyethylene co-polymer layer (i.e. CBABC).
It is envisaged that the oriented multilayer film of the present invention may also comprise further outer layers D, such as sealing layers.
Where a non-polar outer layer is present, a preferred symmetric film of the invention comprises seven layers disposed in the order outer layer/multimodal polyethylene co-polymer layer/tie layer/barrier layer/tie layer/multimodal polyethylene co-polymer layer/outer layer (i.e. DCBABCD).

Generally, symmetric films are preferred due to their ease of manufacturing and equal properties from both sides. In particular, it is preferred that each type of layer (barrier (A), multimodal polyethylene co-polymer layer (C), tie (B) and outer (D)) in the film is the same.

However, asymmetric films may be preferred for some applications. Examples of asymmetric films include the three-layer film having the structure comprising film layers as defined above and a four layer film having layers disposed in the order outer layer/non-polar layer/tie layer/barrier layer (DCBA).

Films may include more than one of each layer, provided that the multilayer polymer film always comprises at least one structure of layers A, B and C in the order ABC.

It is further envisaged that the oriented multilayer film of the present invention can be produced by blocking two asymmetric films to form a film comprising layers the following structure: [CBAB(blocking layer) + (blocking layer)BABC] and [DCBABC(blocking layer)+(blocking layer)CBABCD].

Alternatively, the oriented barrier films of the present invention may consist of any of the following layers: CBABC or DCBABCD or CBABABC or DCBABABCD as well as [CBAB(blocking layer) + (blocking layer)BABC] or [DCBABC(blocking layer) + (blocking layer)CBABCD].

Preferably it is two non-oriented (primary) films that are blocked together after extrusion, so the stretching is done on the blocked film.

The person skilled is aware of suitable materials to form the blocking layers: such blocking layers can be ethylene copolymer component having a melting point (Tm) of 100°C or less, e.g. a melting point of 80 to 95°C. Preferred materials for such blocking layers are ethylene alkyl acrylate polymer (e.g. an ethylene C1-10 alkyl acrylate polymer). Preferred ethylene alkyl acrylate polymers are ethylene methyl acrylate (EMA), ethylene ethyl acrylate and ethylene butyl acrylate, especially EMA. The acrylate content of the ethylene acrylate copolymer may be in the range 1 to 40 wt%, preferably 2 to 30 wt%, more preferably 3 to 28 %, especially 5 to 25 wt%. The ethylene acrylate copolymers are very well known and commercially available (e.g. from DuPont).

## Layer A

A/the barrier layer (A) must comprise a polar polymer as polar barrier polymer. The term polar is a familiar to the ones in chemistry and refers to a functionality that has a significant dipole such as OH, NH- and so on. The monomer units forming the barrier layer cannot therefore simply be formed from C and H only. There must be a polar monomer involved giving rise to a polar group in the formed polymer.

Polar polymers that may be used as/in a/the barrier layer include polyamide (PA), ethylene-vinyl alcohol co-polymer (EVOH), polyethylene terephthalate (PET), polybutylene terephthalate (PBT), polyethylene naphthalate (PEN), polycarbonates (PC) and copolymers and mixtures thereof. Of these, PA and EVOH are preferred, especially EVOH.

Examples of PA include nylons 4, 6, 7, 8, 11, 12, 6.6, 6.10, 6.11, 6.12, 6T, 6/6.6, 6/12, 6/6T, 6I/6T and MXD6.

Examples of EVOH include copolymers having between 20 and 50 mol % ethylene content, e.g. between 30 and 50, or between 32 and 46 mole % ethylene content. Copolymers having an ethylene content of around 44 mol % (such as those obtainable from Kuraray, Texas, USA under the tradename EVAL, e.g. EVAL™ E105B) are preferred.

It is well known to the person skilled in the art, that the properties of EVOH-grades strongly depend on the ethylene content:

EVOH-grades with lower ethylene content show better barrier behaviour, but are more difficult in processing behaviour (especially during the production of a rather thick, non-oriented primary film) and are usually more expensive than EVOH-grades with higher ethylene content.

Polar polymers for use in the present invention may be obtained from commercial sources or synthesised by methods known in the art.

The MFR190/2 of the barrier polymer may be 1 to 10 g/10min.

A/the barrier layer preferably contains only barrier polymers. Thus, a/the barrier layer "consists essentially of" barrier polymer components. The term consist essentially of is used herein to exclude the presence of another polymer component. It will be appreciated that polymers are often admixed with known additives described in detail below. The term consists essentially of allows for the presence of such standard additives (possibly added via a masterbatch) but excludes the presence of another polymer component.

Ideally, a/ pthe barrier layer consists essentially of EVOH only.

The thickness of the polar layer(s) will typically be determined by the desired physical properties and/or gas transmission rate as well as by the structure and Stretch Ratio of both the non-stretched (primary) and the stretched (secondary) film.

Inventors have identified, that stretching the multilayer barrier film of the present invention allows to improve barrier properties with a given barrier layer thickness.

Inventors have further identified, that the oriented multilayer barrier films of the present invention provide good barrier behaviour with thinner barrier layers than known in the art.

These barrier layers in the MDO-oriented film will typically be at least 0.5 $\mu$m thick and preferably at least 1.0, 1.5 or 2.0 $\mu$m thick. Furthermore, the polar layer(s) in the MDO-oriented film will typically be less than 15 $\mu$m thick; such as less than 10.0, 7.5 or 5.0 $\mu$m thick. In a preferred embodiment, the polar layer in the MDO-oriented film has a thickness of between 2.0 and 4.5 $\mu$m, especially between 2.2 and 3.3 $\mu$m, e.g. about 2.4 or 3.0 $\mu$m.

In a similar preferred embodiment the thickness or average thickness of the/all barrier layer(s), especially for example of the polar barrier polymer of layer A), is at most 18.0 % of the overall film thickness of the oriented multilayer film, preferably at most 15.0 %, further preferred at most 12.0 % or at most 10.0% or less of the overall film thickness of the oriented multilayer film.

## Layer B

The tie layer (B) of the invention is positioned in between and adjacent to the barrier layer (A) and the multimodal polyethylene copolymer layer (C). Tie layers of the present films comprise an amphiphilic polymer and a non-polar polyethylene polymer which can be the same or different to that used in the polyethylene layer as defined for layer (C). The non-polar polyethylene of the tie layer is again, however, one comprising carbon and hydrogen atoms only. This ensures excellent compatibility with the layer (C) in the formed film.

Preferably the tie layer consists essentially of (e.g. consists of) one or more of each of said polymers. The tie layer has the appropriate properties to allow it to adhere both to the polar barrier layer and also to the polyethylene layer as defined for layer (C) in the film.

The term amphiphilic implies the presence of both non polar and polar functionalities in the polymer. Amphiphilic polymers that may be used in the tie layer include modified polyolefins, such as copolymerised or graft-polymerised polymers of an olefin (typically an $\alpha$-olefin having 2 to 8 carbon atoms, e.g. ethylene and/or propylene) and an $\alpha,\beta$-unsaturated carboxylic acid or a derivatives thereof.

The $\alpha$-olefin component in the graft amphiphilic polymer may be a polyethylene or polypropylene such as an ethylene-propylene copolymer, ethylene- butene-1 copolymer or the like. In particular, however, the olefin component is an LLDPE or HDPE, especially an LLDPE. In the grafted amphiphilic polymers, the $\alpha,\beta$-unsaturated carboxylic acid or derivative thereof may be acrylic acid, methacrylic acid, ethacrylic acid, maleic acid, fumaric acid, an anhydride thereof (especially maleic anhydride), an ester thereof, or the like. The grafted $\alpha,\beta$-unsaturated carboxylic acid or derivative thereof is typically present in the amphiphilic polymer at a level of 0.01 to 25% by weight, preferably 0.05 to 1.5% by weight. Ideally, the graft polymer is formed by the grafting of maleic anhydride onto LLDPE.

For copolymerised amphiphilic polymers, the $\alpha,\beta$-unsaturated carboxylic acid or derivative thereof can be, or can be derived from, acrylic acid, methacrylic acid, sodium acrylate, zinc acrylate, vinylacetate or glycidylmethacrylate. The olefin monomer used is typically ethylene. Examples of copolymerized modified polyolefins therefore include ethylene-vinylacetate copolymer, ethylene-acrylic acid copolymer, ethylene-ethylacrylic acid copolymer and ethylene-sodium acrylate copolymer.

The use of grafted polymers is preferred, most preferably maleic anhydride grafted onto LLDPE. Methods for performing copolymerisation and graft-polymerization are known in the art and suitable polymers are available via these methods and from commercial sources. One preferred amphiphilic polymer is polyethylene having grafted thereon maleic anhydride groups. Especially preferred amphiphilic polymers are produced by Mitsui Chemicals Europe under the tradename Admer, especially Admer® AT2235.

It is well known in the art that the use of the amphiphilic polymer alone in the tie layer performs poorly in terms of the mechanical performance of the film. Accordingly known is the fact that by including an amount of non-polar polyethylene into the tie layer, not only can the mechanical performance of the film be improved but this can be achieved without loss of any adhesion between non polar polyethylene layer (C) and the barrier layer (A). This non-polar polymer can be a polyethylene (I). It can be the same as the polyethylene used in layer (C), or it can be different to the polyethylene used in layer (C).

Thus, it is preferred that the polyethylene used in the tie layer B is an LLDPE or LDPE or HDPE, especially a LLDPE and/or LDPE, preferably LLDPE. In an especially preferred embodiment however, the polymer used in the tie layer is a polyethylene (I) having a density of 910 to 945 kg/m$^3$. Preferably polyethylene (I) has a density of 910 to 925 kg/m$^3$, more preferably 915 to 922 kg/m$^3$.

The polyethylene (I) is preferably a single site or Ziegler Natta polymer.

The weight ratio of the amphiphilic polymer to the polyethylene (I) in the tie layer can be 10:90 up to 90:10, such as 30:70 to 70:30 or 40:60 to 60:40.

Preferably the weight ratio of the amphiphilic polymer to the polyethylene (I) is about 50:50.

The polymer composition of the tie layer is preferably produced by admixing (e.g. dry or melt-blending) the amphiphilic polymer(s) with the non-polar polyethylene. This admixture may be heated before the tie layer is co-extruded or laminated with the other layers of the film.

It is envisaged in the present invention, that also commercially available premixes comprising the amphiphilic polymer and a non-polar ethylene polymer can be used.

The thickness of the tie layer(s) will depend in part on the desired properties of the oriented multilayer barrier film. However, these layers should be thick enough to provide the film with the desired impact and tear resistance properties.

Typically, the tie layer(s) has at least the same thickness as the barrier layer. Preferably the tie layer(s) has at least 1.5 times the thickness of the barrier layer, such as 2.0, or 2.5 times the thickness of the barrier layer.

**Layer C**

The polyethylene forming layer C comprises a multimodal copolymer of ethylene and at least one comonomer selected from C4-10 alpha-olefin. Within this invention the expression "multimodal copolymer" or "multimodal polyethylene copolymer" refers to such a copolymer of ethylene and at least one comonomers selected from C4-10 alpha-olefin.

The comonomers are especially selected from 1-butene, 1-hexene or 1-octene, wherein 1-butene is especially preferred.

Ideally the multimodal copolymer contains 1 comonomer only.

The polyethylene forming layer C can also comprise a multimodal copolymer of ethylene and at least two different comonomers selected C4-10 alpha-olefin.

The expression multimodal copolymer of ethylene covers in this invention ethylene copolymers with one or more comonomers. Within this invention such a multimodal copolymer of ethylene and at least two different comonomers selected C4-10 alpha-olefin may be expressed as "multimodal terpolymer" or "multimodal ethylene terpolymer", which are within the definition of multimodal copolymer of ethylene, or multimodal ethylene copolymer.

Ideally, the multimodal polyethylene terpolymer contains exactly 2 comonomers. The comonomers are especially selected from 1-butene, 1-hexene or 1-octene, wherein a combination of 1-butene and 1-hexene as comonomers is especially preferred.

The amount of comonomers present in the multimodal copolymer is preferably 0.5 to 12 mol%, e.g. 2 to 10% mole, especially 4 to 8% mole regardless of the number of comonomers present.

The multimodal copolymer of the present invention is multimodal, such as bimodal, i.e. its molecular weight profile does not comprise a single peak but instead comprises the combination of two or more peaks (which may or may not be distinguishable) centred about different average molecular weights as a result of the fact that the polymer comprises two separately produced components.

Alternatively, the multimodal copolymer of the present invention can be multimodal in view of its comonomer content or in view of its comonomer quality.

It is especially envisaged that the multimodal polyethylene copolymer or the multimodal polyethylene terpolymer can be multimodal, such as bimodal in various aspects, such as in view of molecular weight and comonomer distribution.

Multimodal polyethylene copolymers are typically made in more than one reactor, each having different conditions. The components of the multimodal copolymer are typically so different that they show more than one peak or shoulder in the diagram given as result of its GPC (gel permeation chromatograph) curve, where d(log(MW)) is plotted as ordinate vs log(MW), where MW is molecular weight.

The multimodal polyethylene copolymer of the present invention can comprise a lower molecular weight fraction being a polyethylene homo-or copolymer and a higher molecular weight fraction being a copolymer of ethylene and at least one, preferably exactly one, alpha olefin comonomer having 4-10 carbon atoms.

In case both the lower and the higher molecular weight fraction are copolymers, then the comonomers in both fraction may be ident in view of their quality, but may still differ in their respective amount.

The comonomers are especially selected from 1-butene, 1-hexene or 1-octene, wherein 1-butene is especially preferred.

In case the multimodal copolymer used in the present invention is a multimodal terpolymer, it can comprise a lower molecular weight fraction being a ethylene homopolymer and a higher molecular weight fraction being a terpolymer of ethylene and at least two alpha olefin comonomers having 4-10 carbon atoms.

Alternatively the multimodal polyethylene terpolymer of the present invention can preferably comprise

(C-a1) a lower molecular weight homopolymer of ethylene; and
(C-a2) a higher molecular weight terpolymer of ethylene, 1-butene and a C6-C10-alpha-olefin such as 1-hexene, or
(C-b1) a lower molecular weight copolymer of ethylene and 1-butene; and
(C-b2) a higher molecular weight copolymer of ethylene and one C6-C10-alpha-olefin such as 1-hexene; or
(C-c1) a lower molecular weight copolymer of ethylene and a C6-C10-alpha olefin; and

(C-c2) a higher molecular weight terpolymer of ethylene, 1-butene and a C6-C10-alpha olefin, such as 1-hexene.

More preferably the multimodal polyethylene terpolymer comprises a lower molecular weight homopolymer of ethylene and a higher molecular weight terpolymer of ethylene, 1-butene and 1-hexene, as defined in (C-a1) and (C-a2).

The multimodal polyethylene co-polymers may be produced by polymerisation using conditions which create a multimodal (e.g. bimodal) polymer product ideally using a Ziegler Natta catalyst system. Typically, a two or more stage, i.e. multistage, polymerisation process is used with different process conditions in the different stages or zones (e.g. different temperatures, pressures, polymerisation media, hydrogen partial pressures, etc). Preferably, the multimodal (e.g. bimodal) co-polymers are produced by a multistage polymerisation, e.g. using a series of reactors, with optional comonomer addition preferably in only the reactor(s) used for production of the higher/highest molecular weight component(s). A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

The multimodal copolymer can have a density in the range of 920 - 939, like 926 - 939, e.g. 930-938 kg/m$^3$. Ideally, the multimodal copolymer has a density of 930 - 936 kg/m$^3$. Alternatively the density may be from 933 - 938 kg/m$^3$.

It is preferred, that the polyethylene as defined in layer C is free of any high density polyethylene with and density of 950 kg/m$^3$ or above.

The melt flow rate 190/5 according to ISO1133 (i.e. MFR5) of the multimodal copolymer is 5.0 g/10 min or below.

The MFR190/5 is preferably in the range 0.05 to 5.0 g/10min, e.g. 0.10 to 4.0 g/10min, preferably 0.20 to 3.0 g/10min. The MFR5 is highly preferably in the range of 0.30 to 2.5 g/10min.

The MFR21 of the multimodal co-polymer may be up to 70.0 g/10 min, like in the range 5.0 to 60.0 g/10min, preferably 10.0 to 50.0 g/10min, 13.0 to 47.0 g/10 min or 15.0 - 45.0 g/10 min.

The ratio of MFR21 to MFR5 is an indication on molecular weight distribution and to a certain extent also to processability. The ratio of MFR21 to MFR 5 is understood as Flow Rate Ratio FRR 21/5.

The FRR21/5 is preferably at least 10.0 or higher, e.g. 15.0 or higher, such as 18.0 or 21.0 or higher. The FRR21/5 is usually 50.0 or below, such as 35.0 or lower, like 32.0 or 28.0.It is thus preferred that the FRR21/5 of the multimodal copolymer is in the range of 10.0 to 50.0, such as 15.0 to 35.0, or 18.0 to 32.0.

It is preferred, that the multimodal polyethylene copolymer of the present invention has a MFR5 in the range of 0.1 - 2.5 g/10 min and a FRR21/5 of at least 10.

It is alternatively preferred, if the multimodal polyethylene co-polymer of the present invention has a MFR21 in the range of 10.0 - 50.0 g/10 min and a FRR21/5 of at least 10.

The Mw of the multimodal copolymer may be in the range 100,000 to 300,000, preferably 150,000 to 270,000. The Mw/Mn of the multimodal copolymer may be in the range 10 to 30, preferably 10 to 25.

It is alternatively preferred, that the multimodal polyethylene copolymer of the present invention has a molecular weight distribution (Mw/Mn) of at least 10 and either a MFR5 of 0.1 - 2.5 g/10 min or a MFR21 of at most 70 g/10 min

The lower molecular weight fraction of the multimodal polyethylene copolymer may have a MFR2 of at least 50.0, preferably 50.0 to 3000 g/10 min, more preferably at least 100 g/10 min. The molecular weight of the lower molecular weight component should preferably range from 20.000 to 50.000, e.g. 25.000 to 40.000.

The density of the lower molecular weight component may range from 930 to 980 kg/m$^3$, e.g. 940 to 970 kg/m$^3$, more preferably 945 to 955 kg/m$^3$ in the case of copolymer and 940 to 975 kg/m$^3$, especially 960 to 972 kg/m$^3$ in the case of homopolymer.

The lower molecular weight component preferably forms from 30 to 70 wt%, e.g. 40 to 60% by weight of the multimodal co-polymer with the higher molecular weight component forming 70 to 30 wt%, e.g. 40 to 60% by weight.

The higher molecular weight component of the multimodal polyethylene co-polymer has a lower MFR2 and a lower density than the lower molecular weight component.

The higher molecular weight component preferably has an MFR2 of less than 1.0 g/10 min, preferably less than 0.5 g/10 min, especially less than 0.2 g/10min. The higher molecular weight component ideally has a density of less than 915 kg/m$^3$, e.g. less than 910 kg/m$^3$, preferably less than 905 kg/m$^3$. The Mw of the higher molecular weight component may range from 100,000 to 1,000,000, preferably 250,000 to 500,000.

The multimodal copolymer of ethylene and at least one or at least two different comonomers selected from C4-C10 alpha olefins can be blended with other polymers.

Ideally, the amount of the multimodal ethylene copolymer comprised by layer C is at least 50 wt.-% or higher, such as 70.0 wt.-% or higher, like 85.0, 90.0 or 95.0 wt.-% or higher.

Layer C may also consist of the multimodal ethylene copolymer as defined above.

**Other layers (D)**

The film of the invention may also contain further layers outside the main three layers defined in the invention. Ideally any further layer may act as a sealing layer to allow the film to seal to itself or to another substrate.

Any further layer(s) D can be formed by co-extruding simultaneously with the ABC-film structure.

Alternatively further layer(s) can be applied to the primary or secondary ABC-film structure, i.e. before or after orientation, by lamination or other suitable methods.

It is envisaged in the present invention, that lamination of the oriented barrier films can be done either to itself or to any further substrate.

So e.g. a secondary (stretch) CBABC film can be laminated onto a further secondary (stretched) CBABC film.

The person skilled is aware of suitable polymers and/or structures used for lamination.

In case the outer layer D is applied by lamination, symmetric and asymmetric film structures are equally preferred to be laminated to.

Ideally, if a further layer is present then there should be a further layer on both sides of the polymer film, preferably an identical further layer on both sides of the film.

Any additional outer layer present preferably comprises, such as consists essentially of, a further non-polar polyethylene. The non-polar ethylene polymer which is part of an outer layer is again preferably a polyethylene based polymer in which ethylene forms the major component.

Preferred components of the outer layer include LDPE, LLDPE and HOPE polymers and mixtures thereof, e.g. a polyethylene (I) as hereinbefore defined.

In a preferred embodiment, the outer layer comprises more than one polyethylene. Ideally the outer layer (D) comprises at least an LLDPE or polyethylene (I) (as defined for layer (B)) or at least an LDPE, especially a mixture of an LLDPE and an LDPE.

Any LLDPE present can be multimodal or unimodal.

Any polyethylene or LLDPE present in the outer layer can be made using single site or Ziegler Natta catalysis,

When the outer layer is a sealing layer, polyethylene grades produced via single site catalysis are preferred.

LLDPE may be present in a major amount, i.e. greater than 50% of the polymer composition of the outer layer. In this case, the LDPE, which is also preferably as defined herein, is present in a minor amount, i.e. less than 50% of the polymer component of the outer layer.

Preferably the LLDPE is present in an amount of from 75-99% by weight of the outer layer, especially 85-95 % by weight, e.g. around 90 % by weight. The LDPE is preferably present in an amount of from 1-25 % by weight of the outer layer, especially from 1-20 % or 5-15 % by weight, e.g. around 10 % by weight.

In an especially preferred embodiment, the outer layer comprises LLDPE and LDPE, such as around 75 to 95 % by weight of a LLDPE and around 5 to 25 wt % of LDPE.

The thickness of the outer layer(s) will typically be determined by the desired physical properties of the film, e.g. tear resistance or heat-seal properties.

However, these outer layers will on the final film typically be at least 2 $\mu$m thick and preferably at least 3, 5, or 7.5 or 10.0 $\mu$m thick.

Viewed from an alternative point of view, the thickness of the outer layers will form at most 20 % of the total film thickness, such as 2.0 - 15 % or 3.0 - 10 %. Preferably such outer layers form around 5 % of the total film thickness.

It is understood within this application that the oriented barrier films may further contain additives, stabilisers, processing aids or pigments as known and commonly used in the art. This is also or especially valid in conjunction with expressions and formulation using the closed wording "consisting of".

**Layer thickness distribution**

The layer thickness distribution of (oriented) multilayer barrier films has major influence on the processability or performance of the final film.

The thickness of the barrier layer A defines the barrier properties, the thickness of the tie layer has influence on the layer adhesion and stretch-ability of the multilayer barrier film.

The thickness of the polyethylene layer C determines the overall mechanical properties of the film and any optional outer layers D can influence sealing or optical behaviour.

The person skilled will be aware, that the layer distribution does not or a non-oriented (primary) multilayer barrier film will be the same or on average similar as the layer thickness distribution of an oriented (secondary) multilayer barrier films.

The barrier layer A will form at most 18.0 % of the overall thickness of the oriented multilayer barrier films, such as at most 15.0 %, like 12.0 or 10.0 %.

The tie layers B are adjacent to the barrier layer A and have (each) at least the same thickness as the barrier layer, such as 1.5, 2.0, or 2.5 times the thickness of the barrier layer.

Possible layer structures for a CBABC multilayer barrier film can be:

6-27.5 %/ 15-35 %/ 10-18 %/ 15-35 %/ 6-27.5 %.

In the case any other layers D are present, such layers are usually rather thin, i.e. at most 10 μm or below. Their contribution to the overall thickness can then be deducted from the thickness of the polyethylene layer(s) C.

**Special Embodiments:**

In a special embodiment the invention envisages an oriented multilayer barrier polymer film comprising

A) a barrier layer A comprising an ethylene-vinyl-alcohol-copolymer comprising at least 32 wt.-% of ethylene as a polar barrier polymer,

B) a tie layer B comprising an amphiphilic polymer and a non-polar ethylene polymer and

C) a polyethylene layer C comprising a multimodal terpolymer of ethylene, butene and hexene, having a density in the range of 931 - 940 kg/m$^3$ and a MFR190/5 in the range of 0.1 - 5.0 g/10 min and wherein

layer A has a layer thickness of on average at most 18 % of the total film thickness.

layer B is adjacent layers A and C and layers A, B and C are present in the film as layer structure -ABC- in the order ABC, wherein the oriented multilayer barrier polymer film is mono-axially oriented.

**Physical behaviour**

The oriented barrier films of the present invention are characterized by low gas permeability and low gas transmission rates, and show especially good barrier properties in view of oxygen transmission or oxygen permeability.

The person skilled is well aware of the following relation between oxygen transmission rate (OTR) and the oxygen permeability (OP):

Oxygen transmission rate (OTR) defines the amount of oxygen passed through a given film having a given thickness (regardless of its thickness), while oxygen permeability (OP) takes into account the thickness of the film tested:

$$\text{Oxygen permeability (OP)} = \text{oxygen transmission rate (OTR)} * \text{film thickness}$$

Depending on the dimension of the film thickness, the OP is indicated in [(cm$^3$*mm)/(m$^2$*day)] or [(cm$^3$*pm)/(m$^2$*day)].

When comparing barrier properties of films with different film gauges, it is more appropriate to compare the oxygen permeability.

The oxygen permeability of the oriented barrier films of the present invention can be at most 0.40 [(cm$^3$*mm)/(m$^2$*day)] or lower such as 0.35 or 0.30 or lower, like 0.28 or 0.26 [(cm$^3$*mm)/(m$^2$*day)].

The oriented barrier films of the present invention are characterised by a well-balanced property profile in view of stiffness, tear resistance and impact behaviour (DDI).

The oriented barrier films of the present invention show high stiffness, both in machine and especially in transversal direction.

Machine direction oriented films (MDO-films) usually have good mechanical properties in machine direction but lower mechanical properties in transverse direction.

As a rough estimation, the tensile values in transverse direction are usually 20 - 30 % or the tensile values in machine direction.

However, with the film structure of the present invention it is possible to achieve remarkably high values of the Tensile Modulus in perpendicular direction and accordingly a remarkably high relative isotropy (Tensile Modulus).

Inventors have found, that the relative isotropy (Tensile Modulus) is very similar to those values, which can normally achieved only by blown film technology.

However, the oriented multilayer barrier films of the present invention show this isotropic behaviour at much high tensile modulus-levels, as can be seen in Table 6 below:

So the oriented multilayer barrier films of the present invention show the same good isotropy as known from blown films while at the same time providing stiffness (tensile modulus) values which are about double the values of a comparable multilayer barrier film produced in blown-film technology.

The tensile modulus of the oriented barrier films can be at least 800 MPa, such as at least 1000 MPa or higher.

The oriented barrier films of the present invention are especially advantageous at low film thicknesses, i.e. of 30 μm of below: with such thin films the tensile modulus can be up to at least 1150 MPa or higher, such as 1200 MPa, 1300 or 1400 MPa.

The tensile modulus of the oriented barrier films measured in transverse direction can be at least 1000 MPa, such as 1100 MPa or higher, like 1180 MPa or higher.

The oriented barrier films of the present invention show very pronounced behaviour in view or Relative Isotropy (Tensile Modulus):

The relative Isotropy (Tensile Modulus) can be at least 35 %, or higher, such as 50 % or higher. Preferably the relative Isotropy (tensile Modulus) is at least 65% or 75% or higher, such as at least 80 %.

As mentioned, the oriented barrier films of the present invention are characterised by both good stiffness and relative Isotropy (Tensile Modulus), namely by a Tensile Modulus of at least 800 MPa or higher and a relative Isotropy (Tensile Modulus) of at least 35 % or higher; preferably a tensile modulus of at least 1000 MPa and a relative Isotropy (Tensile Modulus) of at least 50 % or higher.

Isotropic behaviour is an important property for various films and applications as well as during several processing steps, like during printing, converting or laminating.

It is desired that films have uniform or very similar mechanical properties both in machine as well as in perpendicular direction also in view of DDI or penetration resistance. Furthermore isotropic behaviour is essential to avoid uncontrolled tear propagation in either machine or perpendicular direction, like during printing, converting or laminating.

The oriented barrier films of the present invention show very balanced behaviour in the Elmendorf tear resistance when comparing the tear resistance values in machine and transversal direction. This very balanced behaviour can be expressed by the "relative Isotropy (Elmendorf)"-parameter.

The **relative isotropy** (Elmendorf) is determined by the ration of

$$\text{tear resistance}\ (_{\text{smaller of TD and MD}})\ /\ \text{tear resistance}\ (_{\text{higher of TD and MD}})\ *100\ [\%]$$

The oriented barrier films of the present invention show a relative isotropy (Elmendorf) of at least 20 % or higher, such as 25 % or 30 % or higher. The relative isotropy of the oriented barrier films of the present invention can be also 45 %, such as 60 % or higher.

In a preferred embodiment the oriented barrier films of the present invention are characterised both by

a relative isotropy (Elmendorf) of at least 20 % or higher and
a relative Isotropy (Tensile Modulus) of at least 35 %.

Dart Drop Impact (DDI)

The oriented barrier films of the present invention show very good impact behaviour in the sense of good DDI properties.

The DDI of the oriented barrier films of the present invention can be at least 35 g, or higher, such as at least 50 g, or at least 60 g.

The oriented barrier films of the present invention are further characterised by both good impact, as well as good barrier properties, namely

a DDI of at least 35 g and
an oxygen permeability of at most 0.40 $[(cm^3{*}mm)/(m^2{*}day)]$.

Alternatively the oriented barrier films of the present invention can be characterised by both good barrier and good isotropy, namely
an oxygen permeability of at most 0.40 $[(cm^3{*}mm)/(m^2{*}day)]$ or lower and either or both of:

an relative isotropy (Elmendorf) of at least 20 % and/or
a relative Isotropy (Tensile Modulus) of at least 35 %.

Furthermore, the oriented barrier films of the present invention can be characterised by good barrier properties as well as good impact and very isotropic behaviour, namely:

an oxygen permeability of at most 0.40 $[(cm^3{*}mm)/(m^2{*}day)]$ or lower and,
a DDI of at least 35 g and either or both of
an relative isotropy (Elmendorf) of at least 20 % and
a relative Isotropy (Tensile Modulus) of at least 35 %.

**Applications**

The oriented barrier films of the present invention can be used for numerous applications whenever any protection from oxygen is sought.

Such applications can be in the field of agricultural films, especially for silage applications, or in the field of packaging, like food, medical or pharmaceutical applications. The films are especially suitable for packing food, like dried food (cereals, rice, pasta, dried fruits, etc), snacks, confectionary, sauces; or fresh food as vegetables, dairy products, fish or meat.

The oriented barrier films can also be used for packing frozen food like chips, vegetables, meat or fish.

Further possible packaging applications comprise beverages, pet food, pharma and medical products, household care, or cosmetics and personal care.

**Process**

The oriented multilayer barrier films are produced by orienting (stretching) a non-oriented (primary) multilayer barrier film by a certain stretch ratio to achieve the final thickness of the oriented (secondary) multilayer barrier film.

This orientation can take place both in in-line and off-lines stretching lines.

The primary multilayer barrier film can be produced by any conventional film, like a blown film or a cast film. It is preferred, that the primary multilayer barrier film is a blown film.

The thickness of the primary multilayer barrier film will depend on the stretching ratio and the final thickness of the oriented multilayer barrier films. Typically the thickness of the primary multilayer film will in the range of 75.0 - 250 $\mu$m, such as 100 - 200 $\mu$m or 125 - 175 $\mu$m.

The primary multilayer barrier film is stretched in the machine direction. Stretching may be carried out by any conventional technique using any conventional stretching devices which are well known to those skilled in the art. Preferably, the film is stretched only in the MD. The effect of stretching in only one direction is to uniaxially orient the film.

The primary multilayer barrier film is stretched at least 3 times, preferably 3 to 10 times, its original length in the machine direction. This is stated herein as a stretch ratio of at least 1:3, i.e. "1" represents the original length of the film and "3" denotes that it has been stretched to 3 times that original length. Preferred films of the invention are stretched in a draw ratio of at least 1:4, more preferably between 1:5 and 1:8, e.g. between 1:5 and 1:7. An effect of stretching (or drawing) is that the thickness of the film is similarly reduced. Thus a draw ratio of at least 1:3 preferably also means that the thickness of the film is at least three times less than the original thickness.

Stretching is preferably carried out at a temperature in the range 70-130 °C, e.g. 90 - 110 or about 105 °C.

The present invention will now be described in further detail by the examples provided below.

**Measuring methods**

**Melt Flow Rate (MFR)**

The melt flow rates are measured at 190 °C with a load of 2.16 kg ($MFR_2$), a load of 5.0 kg ($MFR_5$) or 21.6 kg ($MFR_{21}$) according to ISO 1133.

**Flow Rate Ratio (FRR21/5))**

FRR is determined as the ratio between the MFR21 and the MFR5.

**Density**

The density was measured according to ISO 1183 and ISO1872-2 for sample preparation.

**Oxygen transmission rate (OTR)**

Oxygen transmission rate values were measured by ISO15105-1 using a pressure sensor method (standard conditions: 23°C and a relative humidity 0 %). OTR is measured in a chamber where first both sides of the film are evacuated and then O2 is slowly let to the other side and the gas sensor measures the content from the vacuum side. OTR is usually indicated in $[cm^3/(m^2*day)]$.

When comparing barrier properties of films with different film gauges, it is more appropriate to compare the **oxygen permeability.** (OP), which is determined as given below:

Oxygen permeability (OP) = oxygen transmission rate (OTR) * film thickness

Depending on the dimension of the film thickness, the OP is indicated in $[(cm^3 \cdot mm)/(m^2 \cdot day)]$ or $[(cm^3 \cdot \mu m)/(m^2 \cdot day)]$.

**Tensile Properties:**

TD (transversal direction) and MD (machine direction)

Tensile tests (for tensile strength and tensile modulus) in machine and transverse direction were determined according to ISO 527-3 on films with the given thickness of 30 $\mu$m (CE1) respectively 24 - 39 $\mu$m (oriented barrier films, IE1 - IE3) at a cross head speed of 1 mm/min.

Relative Isotropy (Tensile Modulus) is determined as ratio between the tensile moduli in transverse and perpendicular direction according to the formula given:

Tensile Modulus (smaller of TD and MD) / Tensile Modulus (higher of TD and MD) *100 [%]

**Dart Drop Impact (DDI)** is determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g).

**Tear resistance (determined as Elmendorf tear [N]):** Applies for the measurement both in machine direction and in transverse direction. The tear strength is measured using the ISO 6383/2 method. The force required to propagate tearing across a film sample is measured using a pendulum device. The pendulum swings under gravity through an arc, tearing the specimen from pre-cut slit. The specimen is fixed on one side by the pendulum and on the other side by a stationary clamp. The tear resistance is the force required to tear the specimen. The relative tear resistance (N/mm) is then calculated by dividing the tear resistance by the thickness of the film.

The **relative isotropy** in view of tear resistance (Elmendorf) is accordingly determined by the ratio of

tear resistance (smaller of TD and MD) / tear resistance (higher of TD and MD) *100 [%]

**Molecular weight averages, molecular weight distribution ( Mn, Mw, Mz, MWD)**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i \times M_i)}{\sum_{i=1}^{N} A_i} \quad (2)$$

$$M_z = \frac{\sum_{i=1}^{N}(A_i \times M_i^2)}{\sum_{i=1}^{N}(A_i/M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

$$K_{PP} = 19 \times 10^{-3} \text{ mL/g}, \quad \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE

**Comonomer determination (NMR spectroscopy)**

Quantitative nuclear-magnetic resonance (NMR) spectroscopy was used to quantify the comonomer content of the polymer Quantitative 13C{1H} NMR spectra recorded in the molten-state using a Bruker Advance III 500 NMR spectrometer operating at 500.13 and 125.76 MHz for 1H and 13C respectively. All spectra were recorded using a 13C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.[1, 2, 6] Standard single-pulse excitation was employed utilising the transient NOE at short recycle delays of 3s [1, 3] and the RS-HEPT decoupling scheme [4, 5]. A total of 1024 (1k) transients were acquired per spectrum. This setup was chosen due its high sensitivity towards low comonomer contents. Quantitative 13C{1H} NMR spectra were processed, integrated and quantitative properties determined using custom spectral analysis automation programs. All chemical shifts are internally referenced to the bulk methylene signal ($\delta$+) at 30.00 ppm [9].Characteristic signals corresponding to the incorporation of 1-hexene were observed [9] and all contents calculated with respect to all other monomers present in the polymer.

$$H = I*B4$$

With no other signals indicative of other comonomer sequences, i.e. consecutive comonomer incorporation, observed the total 1-hexene comonomer content was calculated based solely on the amount of isolated 1-hexene sequences:

$$Htotal = H$$

Characteristic signals resulting from saturated end-groups were observed. The content of such saturated end-groups was quantified using the average of the integral of the signals at 22.84 and 32.23 ppm assigned to the 2s and 2s sites respectively:

$$S = (1/2)*( I2S + I3S )$$

The relative content of ethylene was quantified using the integral of the bulk methylene ($\delta$+) signals at 30.00 ppm:

$$E = (1/2) * I\delta +$$

The total ethylene comonomer content was calculated based the bulk methylene signals and accounting for ethylene units present in other observed comonomer sequences or end-groups:

$$Etotal = E + (5/2)*B + (3/2)*S$$

The total mole fraction of 1-hexene in the polymer was then calculated as:

$$fH = ( Htotal / ( Etotal + Htotal )$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner: H [wt%] = 100 * (fH * 84.16) / ( (fH * 84.16) + ((1-fH) * 28.05) )

[1] Klimke, K., Parkinson, M., Piel, C., Kaminsky, W., Spiess, H.W., Wilhelm, M., Macromol. Chem. Phys. 2006;207:382.
[2] Parkinson, M., Klimke, K., Spiess, H.W., Wilhelm, M., Macromol. Chem. Phys. 5 2007;208:2128.
[3] Pollard, M., Klimke, K., Graf, R., Spiess, H.W., Wilhelm, M., Sperber, O., Piel, C., Kaminsky, W., Macromolecules 2004; 37:813.
[4] Filip, X., Tripon, C., Filip, C., J. Mag. Resn. 2005, 176, 239
[5] Griffin, J.M., Tripon, C., Samoson, A., Filip, C., and Brown, S.P., Mag. Res. in Chem. 2007 45, S1, S198
[6] Castignolles, P., Graf, R., Parkinson, M., Wilhelm, M., Gaborieau, M., Polymer 50 (2009) 2373
[7] Zhou, Z., Kuemmerle, R., Qiu, X., Redwine, D., Cong, R., Taha, A., Baugh, D. Winniford, B.,J. Mag. Reson. 187 (2007) 225
[8] Busico, V., Carbonniere, P., Cipullo, R., Pellecchia, R., Severn, J., Talarico, G., Macromol. Rapid Commun. 2007, 28, 1128
[9] J. Randall, Macromol. Sci., Rev. Macromol. Chem. Phys. 1989, C29, 201.

**Material description:**

**Film production of the Inventive and comparative examples:**

The symmetric 7-layer films were prepared by coextrusion on a 7-layer Alpine coextrusion line with a die diameter 300 mm, at a blow up ratio (BUR) of 1:2 and die gap 1.5 mm.
Film thickness of the blown (primary) film was 150 $\mu$m for the inventive examples IE1, IE2 and IE3.
Film thickness of the blown film in the Comparative Example CE1 was 30 $\mu$m. Film thickness of the blown film in the Comparative Example CE2 was 66 $\mu$m. The blown films of CE1 and CE2 were not stretched anymore.
The frostline height, which varies with each layer, was about 900 mm.
The film layers were CCBABCC. The temperature (melt temperatures) for the layers were according table 2 and table 3. The temperature setting on the extruder die was 210°C.
Further details on the structure of these films are also given in table 2 and table 3.
Stretching of the Inventive Examples IE1, IE2 and IE3 was carried out using a monodirectional stretching machine manufactured by Hosokawa Alpine AG in Augsburg/Germany. The unit consists of preheating, drawing, annealing, and cooling sections, with each set at specific temperatures to optimize the performance of the unit and produce films with the desired properties. The heating was at 105°C, the stretching was done at 115 °C, annealing and cooling was done at 110 ° down to 40°C.
The film obtained from blown film extrusion was pulled into the machine direction and then stretched between two sets of nip rollers where the second pair runs at higher speed than the first pair resulting in the desired stretch ratio. Stretching is carried out with the respective stretch ratios to reach the desired thickness. After exiting the stretching machine the film is fed into a conventional film winder where the film is slit to its desired width and wound to form reels.

The oriented barrier films of inventive Examples of the present invention were uniaxially stretched applying Stretch Ratios (SR) of 4; 5 or 6 respectively.

**Eval E105B** is a 44 mol% ethylene vinyl-alcohol copolymer, commercially available by EVAL Europe N.V, Netherlands, was used as the barrier material in layer A.

**Admer® AT2235** is a maleic anhydride grafted linear low density polyethylene commercially available by Mitsui Chemicals.

**Exceed 2018** is a linear low density copolymer of ethylene and 1-hexene produced based on metallocene catalysis, having an MFR2 = 2.0 g/10 min and a density of 918 kg/m$^3$.

The adhesive polymer composition was formulated by dry-blending 50 wt.-% of Admer® AT2235 (Mitsui Chemicals Europe GmbH - Dusseldorf, Germany), with 50 wt.-% of a LLDPE, Exceed 2018 by Exxon Mobil. The 50:50 blend was used a tie-layer as defined for layer B.

**FX1002** is a bimodal, high alpha olefin terpolymer polyethylene grade, commercially available by Borealis. This material was used for the polyethylene layer C.

Properties of these materials are given in table 1.

**Table 1: Properties of the neat polymers as used:**

| Polymer | Density kg/m$^3$ | MFR$_2$ g/10min |
|---|---|---|
| Admer AT2235 | 920 | 0.3 |
| FX 1002 | 937 | 2.0 (MFR$_5$) |
| Exceed 2018 (LLDPE) | 918 | 2.0 |
| EVAL E105B (EVOH) | 1140 | 5.5 |

**Table 2: Process conditions of the non-oriented multilayer barrier film**

| Extruder | Layers | IE 1, IE2, IE3 (150 μm) | |
|---|---|---|---|
| | | Melt Temp. [°C] | Melt Pressure [bar] |
| 1 | C (ext) -15% | 228 | 562 |
| 2 | C - 15% | 226 | 518 |
| 3 | B - 15% | 245 | 437 |
| 4 | A - 10% | 204 | 165 |
| 5 | B - 15% | 247 | 411 |
| 6 | C - 15% | 227 | 500 |
| 7 | C (ext) -15% | 229 | 499 |

**Table 3: Process conditions of the non-oriented multilayer barrier film of the comparative Examples**

| Extruder | Layers | CE1 (30 μm) | | CE2 (66 μm) | | |
|---|---|---|---|---|---|---|
| | | Melt Temp. [°C] | Melt Pressure [bar] | | Melt Temp. [°C] | Melt Pressure [bar] |
| 1 | C (ext) 15% | 225 | 465 | 15% | 236 | 524 |
| 2 | C - 15% | 223 | 428 | 27.5 % | 234 | 571 |
| 3 | B - 15% | 232 | 356 | 5% | 217 | 311 |
| 4 | A - 10% | 203 | 135 | 5% | 214 | 181 |
| 5 | B - 15% | 235 | 334 | 5% | 218 | 295 |
| 6 | C - 15% | 225 | 421 | 27.5 % | 236 | 551 |
| 7 | C (ext) 15% | 226 | 419 | 15% | 237 | 466 |

**Table 4: Film structure**

| | IE1 MDO | IE2 MDO | IE3 MDO | CE1 blown film | CE2 blown film | |
|---|---|---|---|---|---|---|
| Layer thickness ↓ | SR* 4; 39 μm | SR 5; 30 μm | SR 6; 24 μm | 30 μm | Layer thickness | 66 μm |
| Layer C (ext.) -15% | BORSHAPE FX1002 | | | BORSHAPE FX1002 | 15% | LLDPE(918) + LDPE 90:10 |
| Layer C - 15% | BORSHAPE FX1002 | | | BORSHAPE FX1002 | 27.5 % | FX1002 |
| Layer B - 15% | Admer AT2235E - 50% + EXCEED 2018CA - 50% | | | Admer AT2235E + EXCEED 2018CA - (50 : 50%) | 5% | Admer2235 +FX1002 (20:80) |
| Layer A - 10% | EVAL E 105B | | | EVAL E 105B | 5% | EVOH H171, 38 mol% C2 |
| Layer B - 15% | Admer AT2235E - 50% EXCEED 2018CA - 50% | | | Admer AT2235E - 50% EXCEED 2018CA - 50% | 5% | Admer2235 + FX1002 (20:80) |
| Layer C - 15% | BORSHAPE FX1002 | | | BORSHAPE FX1002 | 27.5 % | pure FX1002 |
| Layer C (ext) 15% | BORSHAPE FX1002 | | | BORSHAPE FX1002 | 15% | LLDPE(918) + LDPE 90:10 |
| * SR = Stretch ratio of MDO films | | | | | | |

**Table 5 Gas transmission properties of inventive (IE) and comparative examples (CE)**

| Permeability | IE1 | IE2 | IE3 | CE1 | CE2 |
|---|---|---|---|---|---|
| Barrier Layer (A) thickness [μm] | 3.9 | 3.0 | 2.4 | 3.0 | 3.0 |
| O2 Transmission rate [cm$^3$/m$^2$d] | 6.4 | 7.5 | 8.5 | 16.2 | 4.4 |
| O2 Permeability [cm$^3$ mm/m$^2$d] | 0.24 | 0.23 | 0.20 | 0.47 | 0.29 |
| Film Thickness [mm] | 0.039 | 0.030 | 0.024 | 0.029 | 0.066 |

**Table 6 Mechanical properties of oriented barrier films**

| | IE1 | IE2 | IE3 | CE1 | CE2 |
|---|---|---|---|---|---|
| Film thickness [μm] | 39 | 30 | 24 | 30 | 66 |
| DDI F50 [g] | 72 | 70 | 69 | 32 | 320 |
| Elmendorf Tear strength MD [N] | 3.40 | 4.3 | 1.95 | 10.06 | 158 |
| Elmendorf Tear strength TD [N] | 3.37 | 1.64 | 1.09 | 1.50 | 464 |
| Relative Isotropy (Elmendorf) [%] | 99 | 38 | 56 | 14.9 | 34 |
| Tensile Modulus MD [MPa] | 1042 | 1347 | 1432 | 643 | 542 |
| Tensile Modulus TD [MPa] | 1150 | 1210 | 1216 | 725 | 616 |
| Relative Isotropy (Tensile Modulus) [%] | 91 | 89 | 85 | 89 | - |
| Tensile stress at break MD [MPa] | 96 | 158 | 173 | 28 | - |
| Tensile stress at break TD [MPa] | 21.9 | 20.9 | 19.4 | 23.8 | - |
| Relative Isotropy (Stress@break) | 23 | 13 | 11 | 85 | - |
| Tensile strain at break MD [%] | 47 | 32.5 | 19.5 | 289 | - |

(continued)

|  | IE1 | IE2 | IE3 | CE1 | CE2 |
|---|---|---|---|---|---|
| Tensile strain at break TD [%] | 600 | 604 | 623 | 530 | - |

The mechanical properties in Table 6 and the gas transmission properties in Table 5 show, that the oriented barrier films of the present invention successfully solve the object of the invention. It is further shown, that good barrier properties can even be achieved despite the fact, that EVOH with higher ethylene content (i.e. lower barrier properties as such) is used.

## Claims

1.  An oriented multilayer barrier polymer film comprising

    A) a barrier layer A comprising a polar barrier polymer,
    B) a tie layer B comprising an amphiphilic polymer and a non-polar ethylene polymer and
    C) a polyethylene layer C comprising a multimodal copolymer of ethylene and at least one comonomer selected from C4-C10 alpha olefins, having

    a Melt flow rate MFR190/5 of at most 5.0 g/10 min when measured according to ISO1133 and
    a density of at least 920 to at most 939 kg/m$^3$ when measured according to ISO1183,

    wherein layer B is adjacent to layers A and C and
    layers A, B and C are present in the film as layer structure -ABC- in the order ABC,
    wherein the oriented multilayer barrier polymer film is mono-axially oriented.

2.  An oriented multilayer barrier polymer film according to claim 1, wherein every polymeric component of the oriented multilayer barrier polymer film comprises at least ethylene as a (co)monomer.

3.  An oriented multilayer barrier polymer film according to any of the preceding claims, wherein the multimodal copolymer of ethylene and at least one comonomer selected from C4-C10 alpha olefins in layer C has a MFR190/21.6 of up to 70.0 g/10 min when measured according to ISO1133.

4.  An oriented multilayer barrier polymer film according to any of the preceding claims, wherein the polyethylene layer C comprises a multimodal copolymer of ethylene and at least two different comonomers selected from C4-C10 alpha olefins.

5.  An oriented multilayer barrier polymer film according to any of the preceding claims, wherein the film has a layer structure comprising the layers -CBABC- in that order.

6.  An oriented multilayer barrier polymer film according to any of the preceding claims, wherein the oxygen permeability of the oriented multilayer barrier polymer film is at most 0.40 (cm$^3$*mm)/(m$^2$*day) when measured according to ISO 15105-1.

7.  An oriented multilayer barrier polymer film according claim 6, having

    a Dart Drop Impact (DDI) according to ISO 7765-1 (method A) of at least 35 g and/or
    a relative Isotropy (Elmendorf) of at least 25 %.

8.  An oriented multilayer barrier polymer film according to any of the preceding claims, having a film thickness of on average at most 100 $\mu$m.

9.  An oriented multilayer barrier polymer film according to any of the preceding claims, wherein the polar barrier polymer of layer A) is selected from polyamide, polyester or ethylene vinyl-alcohol copolymers.

10. An oriented multilayer barrier polymer film according to any of the preceding claims, wherein the barrier layer (A) is at most 18 % of the overall thickness of the oriented multilayer film.

11. Article comprising the oriented multilayer barrier polymer film according to any of the preceding claims.

12. Use of the oriented multilayer barrier polymer film according to any of the preceding claims for packaging food, medical, pharmaceutical or agricultural items.

13. Process for manufacturing an oriented multilayer barrier polymer film according to any of the preceding claims comprising the steps of

1) forming a primary multilayer barrier polymer film comprising

A) a barrier layer A comprising a polar barrier polymer,
B) a tie layer B comprising an amphiphilic polymer and a non-polar ethylene polymer and
C) a polyethylene layer C comprising a multimodal copolymer of ethylene at least one comonomer selected from C4-C10 alpha olefins,
wherein layer B is adjacent layers A and C and
layers A, B and C are present in the order ABC in the film and

2) stretching said primary multilayer barrier polymer film in uniaxial direction with an Stretch Ratio of at least 1:3 to produce an oriented multilayer barrier polymer film.

**Patentansprüche**

1. Orientierte mehrschichtige Polymer-Barrierefolie, umfassend

A) eine Barriereschicht A, umfassend ein polares Barrierepolymer,
B) eine Verbindungsschicht B, die ein amphiphiles Polymer und ein unpolares Ethylenpolymer umfasst, und
C) eine Polyethylenschicht C, die ein multimodales Copolymer aus Ethylen und mindestens einem Comonomer, ausgewählt aus C4-C10-Alpha-Olefinen, umfasst, aufweisend
eine Schmelzflussrate MFR190/5 von höchstens 5,0 g/10 min, wenn gemessen nach ISO1133, und
eine Dichte von mindestens 920 bis höchstens 939 kg/m$^3$, wenn gemessen nach ISO1183, wobei Schicht B an Schichten A und C angrenzt und Schichten A, B und C in der Folie als Schichtstruktur -ABC- in der Reihenfolge ABC vorhanden sind, wobei die orientierte mehrschichtige Polymer-Barrierefolie monoaxial ausgerichtet.

2. Orientierte mehrschichtige Polymer-Barrierefolie nach Anspruch 1, wobei jede Polymerkomponente der orientierten mehrschichtigen Polymer-Barrierefolie mindestens Ethylen als ein (Co)monomer umfasst.

3. Orientierte mehrschichtige Polymer-Barrierefolie nach einem der vorstehenden Ansprüche, wobei das multimodale Copolymer aus Ethylen und mindestens einem Comonomer, ausgewählt aus C4-C10-Alpha-Olefinen, in Schicht C eine MFR190/21,6 von bis zu 70,0 g/10 min aufweist, wenn gemessen nach ISO1133.

4. Orientierte mehrschichtige Polymer-Barrierefolie nach einem der vorstehenden Ansprüche, wobei die Polyethylenschicht C ein multimodales Copolymer aus Ethylen und mindestens zwei verschiedenen Comonomeren, ausgewählt aus C4-C10-Alpha-Olefinen, umfasst.

5. Orientierte mehrschichtige Polymer-Barrierefolie nach einem der vorstehenden Ansprüche, wobei die Folie eine Schichtstruktur aufweist, die die Schichten -CBABC- in dieser Reihenfolge umfasst.

6. Orientierte mehrschichtige Polymer-Barrierefolie nach einem der vorstehenden Ansprüche, wobei die Sauerstoffdurchlässigkeit der orientierten mehrschichtigen Polymer-Barrierefolie höchstens 0,40 (cm$^3$*mm)/(m$^2$*Tag), wenn gemessen nach ISO 15105-1, beträgt.

7. Orientierte mehrschichtige Polymer-Barrierefolie nach Anspruch 6, aufweisend:

einen Dart Drop Impact (DDI) nach ISO 7765-1 (Verfahren A) von mindestens 35 g und/oder
eine relative Isotropie (Elmendorf) von mindestens 25 %.

**8.** Orientierte mehrschichtige Polymer-Barrierefolie nach einem der vorstehenden Ansprüche aufweisend eine Fol1-endicke von durchschnittlich höchstens 100 μm.

**9.** Orientierte mehrschichtige Polymer-Barrierefolie nach einem der vorstehenden Ansprüche, wobei das polare Barrierepolymer der Schicht A) aus Polyamid, Polyester oder Ethylen-Vinyl-Alkohol-Copolymeren ausgewählt ist.

**10.** Orientierte mehrschichtige Polymer-Barrierefolie nach einem der vorstehenden Ansprüche, wobei die Barriereschicht (A) höchstens 18 % der Gesamtdicke der orientierten Mehrschichtfolie beträgt.

**11.** Artikel, der die orientierte mehrschichtige Polymer-Barrierefolie nach einem der vorstehenden Ansprüche umfasst.

**12.** Verwendung der orientierten mehrschichtigen Polymer-Barrierefolie nach einem der vorstehenden Ansprüche zum Verpacken von Lebensmitteln, medizinischen, pharmazeutischen oder landwirtschaftlichen Artikeln.

**13.** Prozess zur Herstellung einer orientierten mehrschichtigen Polymer-Barrierefolie nach einem der vorstehenden Ansprüche, umfassend die Schritte zum

1) Bilden einer primären mehrschichtigen Polymer-Barrierefolie, umfassend

A) eine Barriereschicht A, umfassend ein polares Barrierepolymer,
B) eine Verbindungsschicht B, umfassend ein amphiphiles Polymer und ein unpolares Ethylenpolymer, und
C) eine Polyethylenschicht C, umfassend ein multimodales Copolymer aus Ethylen und mindestens einem Comonomer, ausgewählt aus C4-C10-Alpha-Olefinen,
wobei Schicht B an Schichten A und C angrenzt und
Schichten A, B und C in der Reihenfolge ABC in der Folie vorhanden sind, und

2) Strecken der primären mehrschichtigen Polymer-Barrierefolie in uniaxialer Richtung mit einem Streckverhältnis von mindestens 1:3, um eine orientierte mehrschichtige Polymer-Barrierefolie herzustellen.

**Revendications**

**1.** Film polymère barrière multicouche orienté comprenant

A) une couche barrière A comprenant un polymère barrière polaire,
B) une couche de liaison B comprenant un polymère amphiphile et un polymère d'éthylène non polaire et
C) une couche de polyéthylène C comprenant un copolymère multimodal d'éthylène et d'au moins un comonomère sélectionné parmi les alpha-oléfines en C4-C10, présentant
un indice de fluidité à chaud MFR190/5 d'au plus 5,0 g/10 min lorsqu'il est mesuré selon la norme ISO1133 et une densité d'au moins 920 à au plus 939 kg/m$^3$ lorsqu'il est mesuré selon la norme ISO1183, dans lequel la couche B est adjacente aux couches A et C et les couches A, B et C sont présentes dans le film en tant que structure de couche -ABC- dans l'ordre ABC, dans lequel le film polymère barrière multicouche orienté est orienté mono-axialement.

**2.** Film polymère barrière multicouche orienté selon la revendication 1, dans lequel chaque composant polymère du film polymère barrière multicouche orienté comprend au moins de l'éthylène en tant que (co)monomère.

**3.** Film polymère barrière multicouche orienté selon l'une quelconque des revendications précédentes, dans lequel le copolymère multimodal d'éthylène et d'au moins un comonomère sélectionné parmi les alpha-oléfines en C4-C10 dans la couche C présente un MFR190/21.6 allant jusqu'à 70,0 g/10 min lorsqu'il est mesuré selon la norme ISO 1133,

**4.** Film polymère barrière multicouche orienté selon l'une quelconque des revendications précédentes, dans lequel la couche de polyéthylène C comprend un copolymère multimodal d'éthylène et d'au moins deux comonomères différents sélectionnés parmi les alpha-oléfines en C4-C10.

**5.** Film polymère barrière multicouche orienté selon l'une quelconque des revendications précédentes, dans lequel le film présente une structure de couche comprenant les couches -CBABC- dans cet ordre.

**6.** Film polymère barrière multicouche orienté selon l'une quelconque des revendications précédentes, dans lequel la perméabilité à l'oxygène du film polymère barrière multicouche orienté est d'au plus 0,40 (cm$^3$*mm)/(m$^2$*jour) lorsqu'elle est mesurée selon la norme ISO 15105-1.

**7.** Film polymère barrière multicouche orienté selon la revendication 6, présentant

une résistance à l'impact de masse tombante (DDI) selon la norme ISO 7765-1 (procédé A) d'au moins 35 g et/ou une isotropie relative (Elmendorf) d'au moins 25 %.

**8.** Film polymère barrière multicouche orienté selon l'une quelconque des revendications précédentes, présentant une épaisseur de film d'au plus 100 $\mu$m en moyenne.

**9.** Film polymère barrière multicouche orienté selon l'une quelconque des revendications précédentes, dans lequel le polymère barrière polaire de la couche A) est sélectionné parmi le polyamide, le polyester ou les copolymères éthylène-alcool vinylique.

**10.** Film polymère barrière multicouche orienté selon l'une quelconque des revendications précédentes, dans lequel la couche barrière (A) fait au plus 18 % de l'épaisseur globale du film multicouche orienté.

**11.** Article comprenant le film polymère barrière multicouche orienté selon l'une quelconque des revendications précédentes.

**12.** Utilisation du film polymère barrière multicouche orienté selon l'une quelconque des revendications précédentes pour l'emballage d'articles alimentaires, médicaux, pharmaceutiques ou agricoles.

**13.** Processus de fabrication d'un film polymère barrière multicouche orienté selon l'une quelconque des revendications précédentes comprenant les étapes consistant à

1) former un film polymère barrière multicouche primaire comprenant

A) une couche barrière A comprenant un polymère barrière polaire,
B) une couche de liaison B comprenant un polymère amphiphile et un polymère d'éthylène non polaire et
C) une couche de polyéthylène C comprenant un copolymère multimodal d'éthylène d'au moins un comonomère sélectionné parmi les alpha-oléfines en C4-C10,
dans lequel la couche B est adjacente aux couches A et C et
les couches A, B et C sont présentes dans l'ordre ABC dans le film et

2) étirer ledit film polymère barrière multicouche primaire dans une direction uniaxiale avec un rapport d'étirement d'au moins 1:3 pour produire un film polymère barrière multicouche orienté.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2106342 A
- EP 2796289 A
- US 5759648 A
- WO 02051630 A
- WO 9744371 A
- WO 9618662 A

### Non-patent literature cited in the description

- KLIMKE, K. ; PARKINSON, M. ; PIEL, C. ; KAMINSKY, W. ; SPIESS, H.W. ; WILHELM, M. *Macromol. Chem. Phys.,* 2006, vol. 207, 382
- PARKINSON, M. ; KLIMKE, K. ; SPIESS, H.W. ; WILHELM, M. *Macromol. Chem. Phys.,* 2007, vol. 208, 2128
- POLLARD, M. ; KLIMKE, K. ; GRAF, R. ; SPIESS, H.W. ; WILHELM, M. ; SPERBER, O. ; PIEL, C. ; KAMINSKY, W. *Macromolecules,* 2004, vol. 37, 813
- FILIP, X. ; TRIPON, C. ; FILIP, C. *J. Mag. Resn.,* 2005, vol. 176, 239
- GRIFFIN, J.M. ; TRIPON, C. ; SAMOSON, A. ; FILIP, C. ; BROWN, S.P. *Mag. Res. in Chem.,* 2007, vol. 45 (S1), S198
- CASTIGNOLLES, P. ; GRAF, R. ; PARKINSON, M. ; WILHELM, M. ; GABORIEAU, M. *Polymer,* 2009, vol. 50, 2373
- ZHOU, Z. ; KUEMMERLE, R. ; QIU, X. ; REDWINE, D. ; CONG, R. ; TAHA, A. ; BAUGH, D. ; WINNIFORD, B. *J. Mag. Reson.,* 2007, vol. 187, 225
- BUSICO, V. ; CARBONNIERE, P. ; CIPULLO, R. ; PELLECCHIA, R. ; SEVERN, J. ; TALARICO, G. *Macromol. Rapid Commun.,* 2007, vol. 28, 1128
- J. RANDALL. *Macromol. Sci., Rev. Macromol. Chem. Phys.,* 1989, vol. C29, 201